# EUROPEAN PATENT SPECIFICATION

(11) **EP 2 538 592 B1**
(45) Date of publication and mention of the grant of the patent: **08.06.2016**
(21) Application number: 11170777.4
(22) Date of filing: 21.06.2011
(51) Int. Cl.: H04J 14/02

(54) **Add-and-drop node for a WDM optical network**
Add/Drop-Knoten für ein optisches WDM-Netzwerk
N'ud extraction-insertion pour réseau optique WDM

(43) Date of publication of application: 26.12.2012
(73) Proprietor: ALCATEL LUCENT, 92100 Boulogne-Billancourt (FR)
(72) Inventor: Pointurier, Yvan, 91620 NOZAY (FR); Simonneau, Christian, 91620 NOZAY (FR); Etienne, Sophie, 91620 NOZAY (FR)
(74) Representative: Berthier, Karine

(56) References cited:
- EP-A2- 1 942 565
- CHIARONI D: "Optical Packet Add/Drop Multiplexers for packet ring networks", ECOC2008, ECOC, BRUSSELS, 21-25 SEP 2008, ECOC, BRUSSELS EXPO, BELGIUM, 21 September 2008 (2008-09-21), XP001524738, ISBN: 978-1-4244-2228-9

## Description

### Field of the invention

The invention relates to the technical field of optical communication systems employing a packet granularity.

### Background

Optical packet switching networks employing Wavelength Division Multiplexing (WDM) provide flexibility, high capacity and efficient use of the bandwidth through multiplexing techniques in both time and wavelength. An optical packet add and drop multiplexer (OPADM) for a WDM network makes it possible to perform fundamental functions such as optical packet insertion, optical packet extraction and transparent forwarding of transit traffic on each of a plurality of wavelength channels. The optical transparency of the transit path reduces dramatically the number of transponders required to make such equipment.

EP-A2-1942565 discloses an optical amplifier including an input port and an output port which are coupled together via a data signal line; an amplifier circuit; a gain control circuit coupled to the data signal line and operative for detecting the power level of a burst signal input into the optical amplifier at the input port; and a dummy laser generation circuit having an output coupled to the data signal line and an input coupled to the gain control circuit; where the gain control circuit is operative for controlling the power level output by the dummy laser generation circuit so as to maintain the power level of a signal input into the amplifier circuit at a substantially constant level.

As a conventional Reconfigurable Optical Add Drop Multiplexer, an OPADM typically comprises an optical unit managing the transit traffic in the optical domain, dropping traffic to a drop module and adding traffic from an add module, and an electronic unit that comprises the add and drop modules and interfaces with client devices. An OPADM architecture corresponding to the preamble of claim 1 was described in "Optical Packet Add/Drop Multiplexers for packet ring networks," Proceedings of ECOC 2008, Brussels Expo, Belgium, pp 103-106, XP001524738.

### Summary

In an embodiment, the invention provides an add and drop node for a WDM optical network comprising:
an optical input section adapted to be connected to a first network segment for receiving a plurality of first optical packets on a plurality of wavelength channels,
a drop module for demodulating optical packets selected as a function of control data,
an optical output section adapted to be connected to a second network segment,
a selective transit section arranged between the optical input section and the optical output section for passing a first subset of the first optical packets to the optical output section and preventing a second subset of the first optical packets from reaching the optical output section, wherein the wavelength selective transit section comprises a wavelength demultiplexer, a wavelength multiplexer and a plurality of lines each dedicated to a wavelength channel and each connecting an output of the wavelength demultiplexer to an input of the wavelength multiplexer, an optical gate being arranged on each dedicated line and controlled on a packet-by-packet basis for selectively passing or blocking each optical packet as a function of the control data,
an add module for generating second optical packets adapted for superimposition to the first subset of the first optical packets for WDM transmission to the second network segment, wherein the second optical packets are synchronized with the first optical packets,
a traffic controller adapted to receive the control data relating to the first optical packets from the first network segment and to transmit control data relating to the first subset of the first optical packets and the second optical packets to the second network segment,
a failure detection module for detecting a failure state of the first network segment, and a light source adapted to generate time-continuous optical power in the input section in response to detection of the failure state, the optical power being generated in a spectrum including the plurality of wavelength channels, wherein the optical gate dedicated to a wavelength channel is controlled by the traffic controller to create gaps during time intervals reserved for the second optical packets and to shape the time-continuous optical power into dummy optical packets during the remaining time intervals.

The failure detection module serves to detect that the first optical packets are no more properly transmitted by the first network segment. In an embodiment, the failure detection module is adapted to detect a power loss of the first optical packets or a total loss of light.

In embodiments, the light source is adapted to generate optical power in the input section over a continuous spectrum spanning the plurality of wavelength channels in response to detection of the failure state, wherein the wavelength demultiplexer is adapted to filter the optical power in frequency to pass a narrow range of frequencies to each dedicated line.

In an embodiment, a broadband optical amplifier is arranged in the input section, and the light source comprises pump sources of the broadband optical amplifier adapted to generate amplified spontaneous emission noise over the continuous spectrum spanning the plurality of wavelength channels.

In an embodiment, the broadband optical amplifier is set in a constant output power operating mode in response to detection of the failure state.

In another embodiment, the light source comprises a broadband light source connected to the input section by a power coupler or a switch. Such a broadband light source may be designed to emit a continuous spectrum or a discrete, multi-colored spectrum, i.e. a series of wavelength channels aligned on a predetermined frequency grid.

In yet another embodiment, the light source comprises an assembly of laser sources connected to the input section by a power coupler or a switch and adapted to selectively generate optical power over the plurality of wavelength channels.

In an embodiment, a drop link connects the drop module to the optical input section or to an upstream portion of the dedicated lines of the wavelength selective transit section.

In an embodiment, an add link connects the add module to the optical output section or to a downstream portion of the dedicated lines of the wavelength selective transit section.

In an embodiment, the traffic controller is adapted to generate control data indicating that the dummy optical packets contain no data.

In an embodiment, the dummy optical packets and the second optical packets are generated in a synchronized manner on all wavelength channels.

In an embodiment, the traffic controller is adapted to recover a packet clock signal from the control data relating to the first optical packets and control the optical gates in accordance with the packet clock signal. Synchronism between the optical packets on all wavelength channels is preferable for the sake of efficiency. Lack of synchronism between wavelength channels may require a separate packet clock signal for each wavelength channel, to control the optical gate associated to that wavelength. With time slots being synchronized on all wavelength channels, a single packet clock signal may serve to control all the optical gates as well as the optical transmitters of the add module.

In an embodiment, the traffic controller is adapted to generate a new packet clock signal in response to detection of the failure state for controlling the optical gates.

In an embodiment, the invention provides an optical ring network comprising: a plurality of add and drop nodes, and
a set of optical links interconnecting the add-and-drop nodes in a sequence having a ring topology, wherein the optical links comprise broadband optical amplifiers.

In an embodiment, the optical ring network further comprises a hub node having a set of optical transmitters connected to a first end of the ring and a set of optical receivers connected to a second end of the ring.

The optical ring network can be constructed as a single or double ring. In a corresponding embodiment, each add and drop node further comprises a second optical input section, a second optical output section and a second wavelength selective transit section arranged between the second optical input section and the second optical output section, the network further comprising a second set of optical links interconnecting the second input and output sections of the add and drop nodes to constitute a second, counter-rotating ring.

In an embodiment, the hub node has a second set of optical transmitters connected to a first end of the second ring and a second set of optical receivers connected to a second end of the second ring.

Aspects of the invention are based on the idea of keeping an optical packet switched network operative to ensure minimum loss of service when a segment of the network is in a failure state, e.g. an optical fiber was cut off. Aspects of the invention stem from the observation that broadband optical amplifiers require a substantially uniform input power independently of actual data traffic in order to avoid transients and ensure optical stability of the optical network. Aspects of the invention stem from the observation that the packet insertion function in an OPADM requires a proper delineation of the incoming optical packets lest inserted traffic might jeopardize transit traffic.

### Brief description of the drawings

These and other aspects of the invention will be apparent from and elucidated with reference to the embodiments described hereinafter, by way of example, with reference to the drawings.
Figure 1 is a functional representation of an optical ring network in which embodiments of the invention can be used.
Figure 2 represents a time-slotted WDM packet traffic that can be used in the network of Figure 1.
Figure 3 is a functional representation of an OPADM that can be used in the network of Figure 1.
Figure 4 is a flow chart of a control method that can be implemented in the OPADM of Figure 3.

### Detailed description of the embodiments

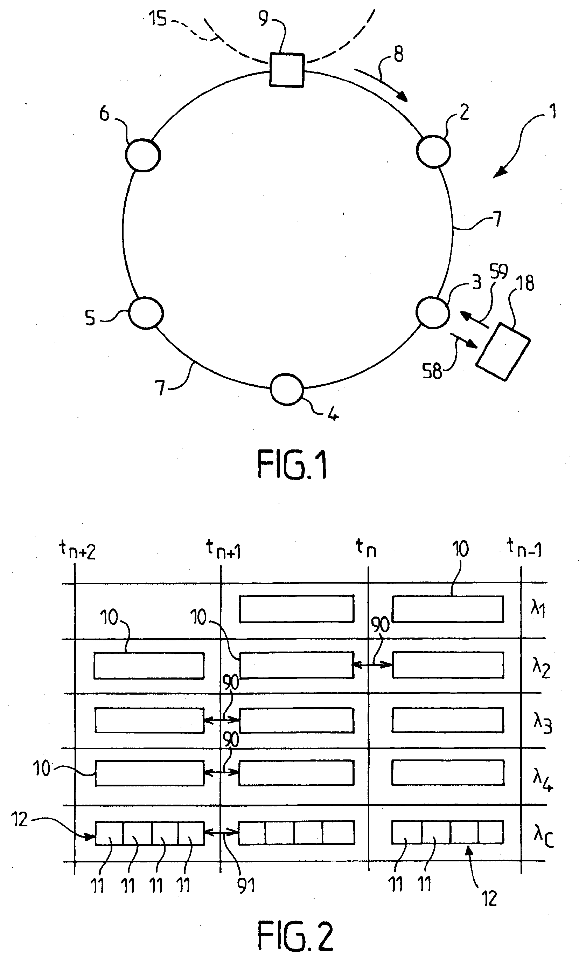

With reference to Figure 1, an optical ring network 1, which can be used in a metropolitan or access segment, comprises optical packet add-drop multiplexers (OPADM) 2, 3, 4, 5, 6 and a hub node 9 connected by optical links 7, e.g. optical fibers. Arrow 8 shows a direction of propagation of the optical packets. Optionally, a second ring could be arranged in the opposite direction.

With reference to Figure 2, the ring network 1 is a time-slotted network where data is transmitted within fixed-duration packets 10 over the optical links 7. Data is transmitted within optical packets 10 carried on N wavelength channels. Although four channels λ1 to λ4, are shown for the sake of illustration, the number of channels can be much higher, as in standard frequency grids. The optical packets 10 are WDM-multiplexed over the optical links 7. To each optical packet 10 is associated a header 11 that contains the control data of the packet, including routing information e.g., the destination, and format information e.g., the client protocol being encapsulated. Packets 10 are transmitted synchronously over all wavelength channels. The packet duration is called a slot. For each slot, the headers 11 for all packets 10 transmitted during that slot are transmitted as a separate control packet 12 over a separate wavelength channel called control channel λc. Hence, data channels λ1 to λ4 carry optical packets 10 while the control channel λc carries the headers 11 of the packets 10.

On data channels λ1 to λ4, each optical packet 10 is separated from the preceding by an inter-packet guard band 90. On control channel λc, the structure of traffic may be similar to or different from the data channels. Namely, the duration of guard band 91 on the control channel λc may be equal to or different from that of inter-packet guard band 90. Alternatively, the control channel may be implemented as a continuous optical signal with no guard band at all or as an electrical signal carried by a separate control link.

The OPADM nodes 2 to 6 of Fig.1 can insert or add traffic on any wavelength thanks to one or more fast tunable lasers, and can receive or drop traffic on specific wavelengths thanks to reconfigurable burst-mode receivers. The OPADM nodes can also let traffic pass transparently through the node, without a conversion to the electrical domain.

The hub node 9 is a different type of node which converts to electronic all the incoming optical packets on the one side, and fills all slots on all wavelengths with light, i.e. either data packets or dummy packets, on the other side. The hub node 9 can interface with another network 15 in a known manner.

A dummy packet is an optical packet with no meaningful content that is used for physical layer-related purposes, namely keeping power received by the optical amplifiers roughly constant at each time-slot, i.e. independently of actual traffic load. In an embodiment, the dummy optical packet may be a pulse of light without any modulation.

In the optical packet switching network 1, a first OPADM node, e.g. node 3, can generate an optical packet 10 comprising a payload encapsulating client data, e.g. one or more data frames coming from one or more client devices 18. At the same time the OPADM node 3 generates control data associated to the optical packet. The generated control data comprises destination data indicating the destination of the payload. At a destination node, e.g. node 5, the optical packet 10 is received and demodulated to obtain an electrical signal comprising the payload.

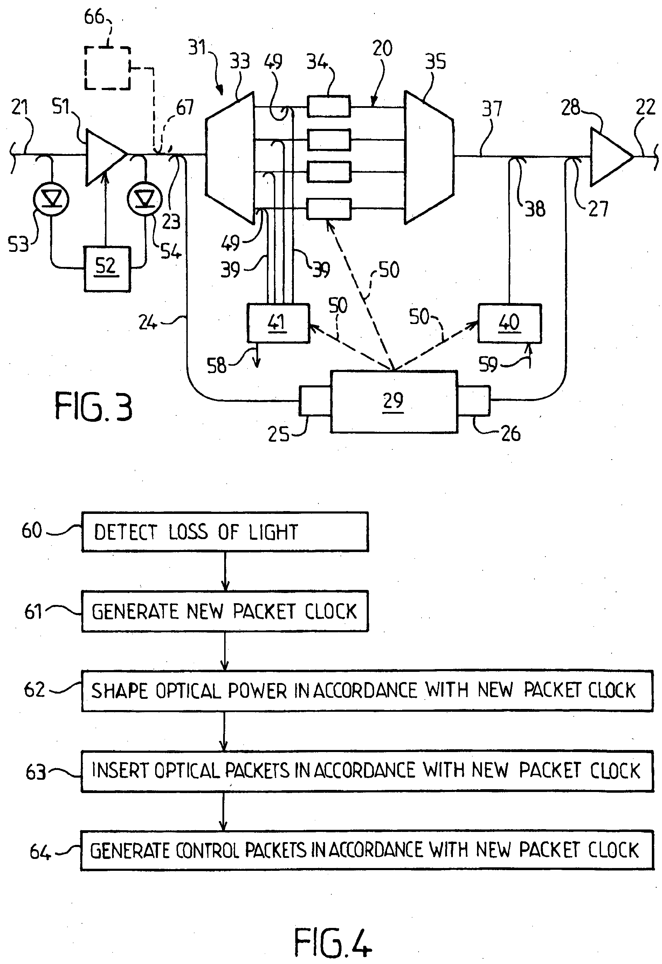

With reference to Figure 3, the detailed architecture of an OPADM will now be described. An input fiber 21 serves to receive WDM traffic from the nodes located upstream in the ring and an output fiber 22 serves to transmit WDM traffic to the nodes located downstream in the ring.

The control channel is processed as follows: the control channel λc is first extracted from the input fiber 21 using an optical splitter or demultiplexer 23, an optical line 24 and an optical transponder 25 with a wavelength-specific filter. After reception, the demodulated control data is processed by a node controller 29, which serves also to generate the outgoing control packets on the control channel λc using a fixed-wavelength transponder 26. The outgoing control channel is injected through a coupler or multiplexer 27 into the output fiber 22 where it is multiplexed with the outgoing data packets. The control channel is opaque, namely it is submitted to optical-to- electrical and electrical-to-optical conversions at each node.

The data channels are processed as follows: optical packets 10 arriving in the optical input fiber 21, multiplexed over N incoming wavelength channels, are inputted in an integrated optical switching block 31, which is capable of switching optical packets on each of the N channels independently, as will be described below.

The integrated optical switching block 31 serves to process transit traffic. The switching block 31 contains a 1:N demultiplexer 33 to separate all N wavelength channels, an array of colored transit lines 20 each comprising an optical gate 34, and an N:1 multiplexer 35. Each optical gate 34 can be triggered at the packet duration granularity to block a packet or let it pass through. An optical gate 34 can be made of a semiconductor optical amplifier (SOA) or with other technology. Packets that are allowed to transit are then multiplexed in wavelength through the N:1 multiplexer 35. The switching block 31 may be integrated into a Photonic Integrated Circuit, which decreases manufacturing costs and reduces the space footprint of the OPADM node.

At the output of the OPADM node, the optical packets coming from the optical switching block 31 through optical line 37 are combined with the added packets coming from the add module 40 through coupler 38 and with the control packet through coupler 27. The output fiber 22 preferably comprises an EDFA 28 for compensating power attenuation occurring in the switching block 31.

The drop module 41 is connected to the optical path by drop lines 39 each connected to an upstream portion of the transit lines 20, i.e. upstream of the optical gates 34, by a drop coupler 49. This arrangement makes it possible to use fixed-wavelength receivers in the drop module 41. Alternatively, a drop line 39 could be connected to the optical path upstream of the demultiplexer 33 to sample all wavelength channels, with wavelength separation taking place inside the drop module 41. The drop module 41 comprises a client port 58 to pass demodulated data to client devices 18, shown on Figure 1. Similarly, the add module 40 comprises a client port 59 to receive client data from client devices 18.

The node controller 29 handles synchronization between packets across wavelength channels, insuring that no added packet is inserted at a time and wavelength that conflicts with a transiting packet; and that all time slots cleared out by the optical gates 34 are indeed filled up by an added packet, such that after the multiplexer 35 and combiner 38, there is no space on any wavelength except for those corresponding to inter-packet guard bands 90. At the output of the OPADM node, there is an optical packet in each time slot, on each wavelength channel. When no useful data is available for insertion in a cleared slot, a dummy packet can be inserted by the add module. Inserted or transiting optical packets 10 that carry no useful data for the downstream segment of the network are marked as "dummy" on the control channel, so that downstream nodes can decide to erase and replace such dummy packets with inserted data packets.

To achieve synchronization between added packets and transiting packets, the node controller 29 uses a packet clock signal. In an embodiment, the packet clock signal is provided on the control channel through the sequence of control packets 12 which is originally generated by the hub node 9 and regenerated by each successive add and drop node along the ring. The node controller 29 recovers the packet clock signal to detect the beginning of each successive time slot and controls the add module 40, drop module 41 and optical gates 34 during each time slot as shown by arrows 50, to manage packet insertion, extraction, and transit as a function of the destination data found in the headers 11.

Now, a failure mode operation of the OPADM node will be described. Assume that the upstream portion of the network 1 fails to transmit the optical signals to the OPADM node, e.g. the optical fiber 7 is cut off by accident between node 2 and node 3. Two main problems arise.

First, since there is no more light in the input fiber 21, there may only exist optical packets inserted by the node itself on the output fiber 22. However, the add module 40 is typically equipped with a number of optical transmitters corresponding to the intended use. In the optical network, the intended use of an OPADM node is typically to insert traffic that takes a portion of the network capacity, not the full capacity of the network. Therefore, there are typically not enough transmitters in the add module 40 to generate optical packets on all wavelength channels in every time slot. As a consequence, if the OPADM node receives no incoming traffic, the optical signal on the output fiber 22 cannot be kept with a constant power on every channel, so that EDFA 28 and/or EDFAs located further down the optical path will experience transient signals and optical stability will be lost.

To solve that first problem, an EDFA 51 arranged on the input fiber 21 can be used to generate amplified spontaneous emission (ASE) over a spectrum that spans all wavelengths channels after the incoming light is lost. As shown, an amplifier control module 52 controls the EDFA 51 to keep the total output power constant in every time slot whatever the state of incoming traffic. The amplifier control module 52 may be equipped with power monitoring photodiodes 53 and 54 to measure the optical power at the input and output of the EDFA 51. As a consequence, when the incoming light is lost, the EDFA 51 starts emitting continuous optical noise over a broad spectrum spanning the wavelength channels used for data traffic.

The ASE noise is then filtered in frequency by demultiplexer 33, which passes a narrow range of frequencies to each transit line 20. Each frequency-filtered ASE noise is then filtered in time by the optical gates 34, to create the guard bands 90 at each time slot, so that the ASE noise is shaped into a sequence of dummy optical packets on each wavelength channel. In addition, the optical gates 34 block the ASE optical noise on time slots and wavelength channels in which the add module 40 must insert optical packets.

The synchronization of the optical gates 34 and add module 40 is controlled by the node controller 29. However, the second problem arising after the incoming light is lost is the loss of the incoming control channel and corresponding packet clock signal.

To solve that second problem, the node controller 29 may take over from the hub node to generate a new packet clock. A corresponding method that may be implemented by the node controller 29 is shown on Figure 4.

At step 60, the loss of power on the input fiber 21 is detected. This can be achieved locally by the photodiode 53 or at network level through a central protection management controller, not shown.

At step 61, the node controller 29 selects an instant as the time origin for the time slots and generates a new periodic packet clock signal from that origin. The frequency of the packet clock signal, i.e. duration of the time slots, may be selected by the OPADM node. Preferably, this frequency is preset for the whole network.

At step 62, the node controller 29 controls the optical gates 34 in accordance with the new packet clock signal to shape the dummy packets.

At step 63, the node controller 29 controls the add module 40 in accordance with the new packet clock signal to insert optical packets in selected time slots.

At step 64, the node controller 29 generates control packets in accordance with the new packet clock signal through transponder 26, so that the new packet clock signal can be recovered by OPADM nodes located further down the optical path.

The second problem may not arise in all cases. Alternatively, an out-of-fiber control channel could also be implemented in the same manner. The difference in that case is that the optical node can still be receiving the control channel after the ring fiber was cut off. In such a case, the node controller 29 could still rely on the packet clock signal provided on the control channel.

In an alternative embodiment, a light source 66 is used instead of the EDFA 51 to generate the continuous optical power when the incoming light is lost. Light source 66 may be a broadband light source spanning all wavelength channels or a multicolored laser assembly with laser frequencies tuned to each wavelength channel. A suitable laser assembly is proposed for example by O/E land LNC (Canada). Light source 66 is connected to the input fiber 21 by a power coupler 67 or an optical switch. An optical switch may be preferred to isolate the light emitted by source 66 from ASE noise of the EDFA 51. Also, if the light source 66 cannot be turned on rapidly enough to meet a service recovery time requirement, it may be kept on at all times. In that case, a switch becomes necessary instead of the coupler 67 between the light source 66 and the optical path.

The OPADM node as described above may be used in ring optical networks or optical networks having any other topology. Although a single ring is shown on Figure 1 for the sake of simplicity, a contra-directional double ring can be built in the same manner. The two rings may implement the protection methods described herein above independently from one another.

Elements such as the control units could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. An add and drop node for a WDM optical network comprising:
an optical input section (21) adapted to be connected to a first network segment for receiving a plurality of first optical packets (10) on a plurality of wavelength channels (λ1-λ4),
a drop module (41) for demodulating optical packets selected as a function of control data (12),
an optical output section (22) adapted to be connected to a second network segment,
a selective transit section (31) arranged between the optical input section and the optical output section for passing a first subset of the first optical packets to the optical output section and preventing a second subset of the first optical packets from reaching the optical output section, wherein the wavelength selective transit section comprises a wavelength demultiplexer (33), a wavelength multiplexer (35) and a plurality of lines (20) each dedicated to a wavelength channel and each connecting an output of the wavelength demultiplexer to an input of the wavelength multiplexer, an optical gate (34) being arranged on each dedicated line and controlled on a packet-by-packet basis for selectively passing or blocking each optical packet as a function of the control data (12),
an add module (40) for generating second optical packets adapted for superimposition to the first subset of the first optical packets for WDM transmission to the second network segment, wherein the second optical packets are synchronized with the first optical packets, a traffic controller (29) adapted to receive the control data relating to the first optical packets from the first network segment and to transmit control data relating to the first subset of the first optical packets and the second optical packets to the second network segment,
**characterized by** a failure detection module (53) for detecting a failure state of the first network segment, and
a light source (51, 66) adapted to generate time-continuous optical power in the input section in response to detection of the failure state, the optical power being generated in a spectrum including the plurality of wavelength channels, wherein the optical gate (34) dedicated to a wavelength channel is controlled by the traffic controller (29) to create gaps during time intervals reserved for the second optical packets and to shape the time-continuous optical power into dummy optical packets (10) during the remaining time intervals, wherein the wavelength demultiplexer (33) is adapted to filter the optical power in frequency to pass a narrow range of frequencies to each dedicated line (20).

2. The add and drop node in accordance with claim 1, wherein the failure detection module (53) is adapted to detect a power loss of the first optical packets.

3. The add and drop node in accordance with any one of claims 1 to 2, wherein the light source (51, 66) is adapted to generate optical power in the input section over a continuous spectrum spanning the plurality of wavelength channels in response to detection of the failure state

4. The add and drop node in accordance with claim 3, further comprising a broadband optical amplifier (51) arranged in the input section, wherein the light source comprises pump sources of the broadband optical amplifier adapted to generate amplified spontaneous emission noise over the continuous spectrum spanning the plurality of wavelength channels.

5. The add and drop node in accordance with claim 4, wherein the broadband optical amplifier is set in a constant output power operating mode in response to detection of the failure state.

6. The add and drop node in accordance with claim 3, wherein the light source comprises a broadband light source (66) connected to the input section by a power coupler or a switch.

7. The add and drop node in accordance with any one of claims 1 to 2, wherein the light source comprises an assembly of laser sources (66) connected to the input section by a power coupler or a switch and adapted to selectively generate optical power over the plurality of wavelength channels.

8. The add and drop node in accordance with any one of claims 1 to 7, further comprising a drop link (39) connecting the drop module (41) to the optical input section (21) or to an upstream portion of the dedicated lines (20) of the wavelength selective transit section.

9. The add and drop node in accordance with any one of claims 1 to 8, further comprising an add link (38) connecting the add module to the optical output section (22) or to a downstream portion of the dedicated lines (20) of the wavelength selective transit section.

10. The add and drop node in accordance with any one of claims 1 to 9, wherein the traffic controller (29) is adapted to generate control data indicating that the dummy optical packets contain no data.

11. The add and drop node in accordance with any one of claims 1 to 10, wherein the dummy optical packets and the second optical packets are generated in a synchronized manner on all wavelength channels.

12. The add and drop node in accordance with any one of claims 1 to 11, wherein the traffic controller (29) is adapted to recover a packet clock signal from the control data (12) relating to the first optical packets and control the optical gates (34) in accordance with the packet clock signal.

13. The add and drop node in accordance with claim 12, wherein the traffic controller (29) is adapted to generate a new packet clock signal in response to detection of the failure state for controlling the optical gates (34).

14. An optical ring network (1) comprising:
a plurality of add and drop nodes (2-6) in accordance with any one of claims 1 to 13,
a set of optical links (7) interconnecting the add-and-drop nodes in a sequence having a ring topology, wherein the optical links comprise broadband optical amplifiers.

15. The optical ring network in accordance with claim 14, further comprising a hub node (9) having a set of optical transmitters connected to a first end of the ring and a set of optical receivers connected to a second end of the ring.

## Patentansprüche

1. Add/Drop-Knoten für ein optisches WDM-Netzwerk, umfassend:
einen optischen Eingangsabschnitt (21), der dafür ausgelegt ist, um mit einem ersten Netzwerksegment verbunden zu werden, um eine Vielzahl erster optischer Pakete (10) auf einer Vielzahl von Wellenlängenkanälen (λ1 - λ4) zu empfangen,
ein Drop-Modul (41) zum Demodulieren optischer Pakete, die als Funktion von Steuerdaten (12) ausgewählt wurden,
einen optischen Ausgabeabschnitt (22), der dafür ausgelegt ist, um mit einem zweiten Netzwerksegment verbunden zu werden,
einen selektiven Transitabschnitt (31), angeordnet zwischen dem optischen Eingangsabschnitt und dem optischen Ausgabeabschnitt zum Zweck des Weitergebens eines ersten Teilsatzes der ersten optischen Pakete an den optischen Ausgabeabschnitt sowie zum Zweck des Verhinderns, dass ein zweiter Teilsatz des ersten optischen Pakets den optischen Ausgabeabschnitt erreicht, wobei der wellenlängenselektive Transitabschnitt einen Wellenlängendemultiplexer (33), einen Wellenlängenmultiplexer (35) und eine Vielzahl von Leitungen (20) umfasst, die je einem Wellenlängenkanal zugeordnet sind und jeweils einen Ausgang des Wellenlängendemultiplexers mit einem Eingang des Wellenlängenmultiplexers verbinden, wobei auf jeder dedizierten Leitung ein optisches Gate (34) angeordnet ist, das nach dem Prinzip Packet-für-Packet gesteuert wird, um selektiv jedes optische Paket in Funktion der Steuerdaten (12) weiterzuleiten oder zu blockieren.
ein Add-Modul (40) zum Generieren zweiter optischer Pakete, die ausgelegt sind für das Überlagern des ersten Teilsatzes der ersten optischen Pakete zur WDM-Übermittlung an das zweite Netzwerksegment, wobei die zweiten optischen Pakete mit den ersten optischen Paketen synchronisiert sind, eine Verkehrssteuerung (29), die dafür ausgelegt ist, um die Steuerdaten zu den ersten optischen Paketen von dem ersten Netzwerksegment zu empfangen und Steuerdaten zu dem ersten Teilsatz des ersten optischen Pakets an das zweite Netzwerksegment zu senden, **gekennzeichnet durch** ein Fehlerfeststellungsmodul (53) für das Feststellen eines Fehlerstatus des ersten Netzwerksegments, und
eine Lichtquelle (51, 66), ausgelegt für das Generieren zeitkontinuierlicher optischer Leistung in dem Eingangsabschnitt in Reaktion auf das Feststellen des Fehlerstatus, wobei die optische Leistung in einem Spektrum generiert wird, welches die Vielzahl von Wellenlängenkanälen umfasst, wobei das einem Wellenlängenkanal zugeordnete optische Gate (34) von der Verkehrssteuerung (29) gesteuert wird, um im Verlauf von Zeitintervallen Lücken zu generieren, die den zweiten optischen Paketen vorbehalten sind, und um die zeitkontinuierliche optische Leistung während der verbleibenden Zeitintervalle in optische Dummy-Pakete (10) umzuformen, wobei der Wellenlängendemultiplexer (33) dafür ausgelegt ist, um die optische Leistung nach Frequenzen zu filtern, um an jede dedizierte Linie einen engen Frequenzbereich weiterzuleiten.

2. Der Add/Drop-Knoten nach Anspruch 1, wobei das Fehlerfeststellungsmodul (53) dafür ausgelegt ist, um einen Leistungsverlust des ersten optischen Pakets festzustellen.

3. Der Add/Drop-Knoten nach einem jeglichen der Ansprüche 1 bis 2, wobei die Lichtquelle (51, 66) dafür ausgelegt ist, um in Reaktion auf das Feststellen des Fehlerstatus im Eingangsabschnitt optische Leistung über ein kontinuierliches Spektrum hinweg zu generieren, welches die Vielzahl der Wellenlängenkanäle abdeckt.

4. Der Add/Drop-Knoten nach Anspruch 3, weiterhin einen im Eingangsabschnitt angeordneten, optischen Breitbandverstärker (51) umfassend, wobei die Lichtquelle Pumpquellen des optischen Breitbandverstärkers umfasst, die dafür ausgelegt sind, um über das gesamte kontinuierliche, die Vielzahl von Wellenlängenkanälen überspannende Spektrum hinweg verstärkte spontane Emissionsgeräusche zu generieren.

5. Der Add/Drop-Knoten nach Anspruch 4, wobei der optische Breitbandverstärker in Reaktion auf das Feststellen eines Fehlerstatus in einen Betriebsmodus mit konstanter Ausgangsleistung versetzt wird.

6. Der Add/Drop-Knoten nach Anspruch 3, wobei die Lichtquelle eine Breitbandlichtquelle (66) umfasst, die über einen Leistungskoppler oder einen Schalter mit dem Eingangsabschnitt verbunden ist.

7. Der Add/Drop-Knoten nach einem jeglichem der Ansprüche 1 bis 2, wobei die Lichtquelle eine Anordnung von Laserquellen (66) umfasst, die über einen Leistungskoppler oder einen Schalter mit dem Eingangsabschnitt verbunden und dafür ausgelegt ist, um über die Vielzahl von Wellenlängenkanälen selektiv optische Leistung zu generieren.

8. Der Add/Drop-Knoten nach einem jeglichen der Ansprüche1 bis 7, weiterhin einen Drop-Link (39) umfassend, der das Drop-Modul (41) mit dem optischen Eingangsabschnitt (21) oder mit dem vorgelagerten Anteil der dedizierten Leitungen (20) des wellenlängenselektiven Transitabschnitts verbindet.

9. Der Add/Drop-Knoten nach einem jeglichen der Ansprüche1 bis 8, weiterhin einen Add-Link (38) umfassend, der das Add-Modul mit dem optischen Ausgangsabschnitt (22) oder mit dem nachgelagerten Anteil der dedizierten Leitungen (20) des wellenlängenselektiven Transitabschnitts verbindet.

10. Der Add/Drop-Knoten nach einem jeglichen der Ansprüche 1 bis 9, wobei die Verkehrssteuerung (29) dafür ausgelegt ist, um Steuerdaten zu generieren, die Angeben, dass die optischen Dummy-Pakete keine Daten enthalten.

11. Der Add/Drop-Knoten nach einem jeglichen der Ansprüche 1 bis 10, wobei die optischen Dummy-Pakete und die zweiten optischen Pakete in synchronisierter Form auf allen Wellenlängenkanälen generiert werden.

12. Der Add/Drop-Knoten nach einem jeglichen der Ansprüche 1 bis 11, wobei die Verkehrssteuerung (29) dafür ausgelegt ist, um ein Paket-Docksignal aus den Steuerdaten (12) rückzugewinnen, das sich auf die ersten optischen Pakete bezieht, und um die optischen Gates (34) gemäß dem Paket-Docksignal zu steuern.

13. Der Add/Drop-Knoten nach Anspruch 12, wobei die Verkehrssteuerung (29) dafür ausgelegt ist, um in Reaktion auf das Feststellen des Fehlerstatus ein neues Paket-Docksignal zur Steuerung der optischen Gates (34) zu generieren.

14. Ein optisches Ringnetzwerk (1), umfassend:
eine Vielzahl von Add/Drop-Knoten (2 - 6) nach einem jeglichen der Ansprüche 1 bis 13, wobei die Add/Drop-Knoten von einem Satz optischer Links (7) in einer Sequenz mit Ringtopologie untereinander verbunden sind, wobei die optischen Links optische Breitbandverstärker umfassen.

15. Das optische Ringnetzwerk nach Anspruch 14, weiterhin einen Netzknoten (9) umfassen, ausgestattet mit einem Satz optischer Sender, die verbunden sind mit einem ersten Endabschnitt des Rings, und ausgestattet mit einem Satz optischer Empfänger, die verbunden Sind mit einem zweiten Endabschnitt des Rings.

## Revendications

1. Noeud d'insertion et d'extraction pour un réseau optique WDM comprenant :
une section d'entrée optique (21) adaptée pour être connectée à un premier segment de réseau pour recevoir une pluralité de premiers paquets optiques (10) sur une pluralité de canaux de longueurs d'onde (λ1-λ4),
un module d'extraction (41) pour démoduler des paquets optiques sélectionnés en fonction de données de contrôle (12),
une section de sortie optique (22) adaptée pour être connectée à un second segment de réseau,
une section de transit sélectif (31) agencée entre la section d'entrée optique et la section de sortie optique pour faire passer un premier sous-ensemble des premiers paquets optiques vers la section de sortie optique et empêcher un second sous-ensemble des premiers paquets optiques d'atteindre la section de sortie optique, la section de transit sélectif en longueur d'onde comprenant un démultiplexeur en longueur d'onde (33), un multiplexeur en longueur d'onde (35) et une pluralité de lignes (20) chacune dédiée à un canal de longueur d'onde et chacune connectant une sortie du démultiplexeur en longueur d'onde à une entrée du multiplexeur en longueur d'onde, une porte optique (34) étant agencée sur chaque ligne dédiée et contrôlée sur une base paquet par paquet pour faire passer sélectivement ou bloquer chaque paquet optique en fonction des données de contrôle (12),
un module d'insertion (40) pour générer des seconds paquets optiques adaptés pour la superposition au premier sous-ensemble des premiers paquets optiques pour la transmission WDM au second segment de réseau, les seconds paquets optiques étant synchronisés avec les premiers paquets optiques,
un contrôleur de trafic (29) adapté pour recevoir les données de contrôle relatives aux premiers paquets optiques en provenance du premier segment de réseau et pour transmettre des données de contrôle relatives au premier sous-ensemble des premiers paquets optiques et aux seconds paquets optiques au second segment de réseau,
**caractérisé par** un module de détection de défaillance (53) pour détecter un état de défaillance du premier segment de réseau, et
une source de lumière (51, 66) adaptée pour générer une puissance optique à temps continu dans la section d'entrée en réponse à la détection de l'état de défaillance, la puissance optique étant générée dans un spectre incluant la pluralité de canaux de longueurs d'onde, la porte optique (34) dédiée à un canal de longueur d'onde étant contrôlée par le contrôleur de trafic (29) pour créer des vides pendant des intervalles de temps réservés aux seconds paquets optiques et pour mettre en forme la puissance optique à temps continu en paquets optiques fictifs (10) pendant les intervalles de temps restants, le démultiplexeur en longueur d'onde (33) étant adapté pour filtrer la puissance optique en fréquence pour faire passer une gamme de fréquences étroite vers chaque ligne dédiée (20).

2. Noeud d'insertion et d'extraction selon la revendication 1, dans lequel le module de détection de défaillance (53) est adapté pour détecter une perte de puissance des premiers paquets optiques.

3. Noeud d'insertion et d'extraction selon l'une quelconque des revendications 1 à 2, dans lequel la source de lumière (51, 66) est adaptée pour générer une puissance optique dans la section d'entrée sur un spectre continu couvrant la pluralité de canaux de longueurs d'onde en réponse à détection de l'état de défaillance.

4. Noeud d'insertion et d'extraction selon la revendication 3, comprenant en outre un amplificateur optique à large bande (51) agencé dans la section d'entrée, dans lequel la source de lumière comprend des sources pompes de l'amplificateur optique à large bande adaptées pour générer un bruit d'émission spontané amplifié sur le spectre continu couvrant la pluralité de canaux de longueurs d'onde.

5. Noeud d'insertion et d'extraction selon la revendication 4, dans lequel l'amplificateur optique à large bande est réglé dans un mode de fonctionnement à puissance de sortie constante en réponse à la détection de l'état de défaillance.

6. Noeud d'insertion et d'extraction selon la revendication 3, dans lequel la source de lumière comprend une source de lumière à large bande (66) connectée à la section d'entrée par un coupleur de puissance ou un commutateur.

7. Noeud d'insertion et d'extraction selon l'une quelconque des revendications 1 à 2, dans lequel la source de lumière comprend un ensemble de sources laser (66) connecté à la section d'entrée par un coupleur de puissance ou un commutateur et adapté pour générer sélectivement une puissance optique sur la pluralité de canaux de longueurs d'onde.

8. Noeud d'insertion et d'extraction selon l'une quelconque des revendications 1 à 7, comprenant en outre une liaison d'extraction (39) connectant le module d'extraction (41) à la section d'entrée optique (21) ou à une partie en amont des lignes dédiées (20) de la section de transit sélectif en longueur d'onde.

9. Noeud d'insertion et d'extraction selon l'une quelconque des revendications 1 à 8, comprenant en outre une liaison d'insertion (38) connectant le module d'insertion à la section de sortie optique (22) ou à une partie en aval des lignes dédiées (20) de la section de transit sélectif en longueur d'onde.

10. Noeud d'insertion et d'extraction selon l'une quelconque des revendications 1 à 9, dans lequel le contrôleur de trafic (29) est adapté pour générer des données de contrôle indiquant que les paquets optiques fictifs ne contiennent aucune donnée.

11. Noeud d'insertion et d'extraction selon l'une quelconque des revendications 1 à 10, dans lequel les paquets optiques fictifs et les seconds paquets optiques sont générés de manière synchronisée sur tous les canaux de longueurs d'onde.

12. Noeud d'insertion et d'extraction selon l'une quelconque des revendications 1 à 11, dans lequel le contrôleur de trafic (29) est adapté pour récupérer un signal d'horloge de paquet à partir des données de contrôle (12) relatives aux premiers paquets optiques et contrôler les portes optiques (34) conformément au signal d'horloge de paquet.

13. Noeud d'insertion et d'extraction selon la revendication 12, dans lequel le contrôleur de trafic (29) est adapté pour générer un nouveau signal d'horloge de paquet en réponse à la détection de l'état de défaillance pour contrôler les portes optiques (34).

14. Réseau en anneau optique (1) comprenant :
une pluralité de noeuds d'insertion et d'extraction (2-6) selon l'une quelconque des revendications 1 à 13,
un ensemble de liaisons optiques (7) interconnectant les noeuds d'insertion et d'extraction dans une séquence ayant une topologie en anneau, dans lequel les liaisons optiques comprennent des amplificateurs optiques à large bande.

15. Réseau en anneau optique selon la revendication 14, comprenant en outre un noeud concentrateur (9) ayant un ensemble d'émetteurs optiques connectés à une première extrémité de l'anneau et un ensemble de récepteurs optiques connectés à une seconde extrémité de l'anneau.
